# EUROPEAN PATENT APPLICATION

(11) **EP 4 203 276 A1**
(43) Date of publication of application: **28.06.2023**
(21) Application number: 21217470.0
(22) Date of filing: 23.12.2021
(51) Int. Cl.: H02K 13/02, H02K 13/00

(54) **ELECTRICAL CONNECTOR FOR A SEPARATELY EXCITED ROTOR**

(71) Applicant: Valeo eAutomotive Germany GmbH, 91056 Erlangen (DE)
(72) Inventor: Wolf, Nico, 97616 Bad Neustadt a.d.Saale (DE); Wieczorek, Christoph, 97616 Bad Neustadt a.d.Saale (DE); Siepker, Carsten, 97616 Bad Neustadt a.d.Saale (DE); Bach, Regina, 97616 Bad Neustadt a.d.Saale (DE); Finger-Albert, Christian, 97616 Bad Neustadt a.d.Saale (DE); Menz, Michael, 97616 Bad Neustadt a.d.Saale (DE); Förtsch, Steffen, 97616 Bad Neustadt a.d.Saale (DE)
(74) Representative: Valeo Powertrain Systems

(57) **Abstract**

The invention concerns a rotor (1) comprising a rotor shaft (4), a rotor body (2) formed of a stack of laminations, a field coil (3) wound around the rotor body (2), at least one slip ring (5) being electrically connected to an end of the field coil (3) through an electrical connector (110), and at least one guiding element (120) configured to mechanically guide the electrical connector (110) towards the corresponding end of the field coil (3) by deforming the electrical connector (110) from a first state into a second state in which the electrical connector (110) comprises an axial portion (113) passing through an axial bore (41) of the rotor shaft (4) and a curved portion (114), an end of the curved portion (114) passing through a through bore (42) of the rotor shaft (4) facing the corresponding end of the field coil (3).

## Description

### FIELD OF THE INVENTION

The present invention belongs to the field of rotary electric machines configured to be on board of an automotive vehicle, such as an electric vehicle (EV) or a hybrid vehicle (HV).

The present invention relates in particular to the field of separately excited rotors, also called wound rotors or slip ring rotors, integrated to rotary electric machines.

### BACKGROUND OF THE INVENTION

As is known, an electric or a hybrid automotive vehicle presents an electric drive comprising a rotary electric machine which need to be supplied with electric power, for instance by a high voltage power supply battery, to deliver a mechanical power in order to ensure the propulsion of the vehicle.

In a general manner, the rotary electric machine comprises a stator, referring to a fixed part of the rotary electric machine, and a rotor, referring to a rotating part of the rotary electric machine. The rotor then comprises a rotor shaft configured to ensure the transmission of the mechanical power between the rotary electric machine and an exterior driven apparatus, notably the wheels of the vehicle.

In particular, it is known to have the rotor separately excited. This type of rotors is commonly referred as wound rotors or slip ring rotors. Such a rotor comprises a rotor body formed of a stack of laminations and having a plurality of teeth projecting radially, and a field coil wound around the plurality of teeth. Then, the field coil is connected to an external power supply through slip rings. The slip rings correspond to electro-mechanical devices configured to allow the exchange of electric power between the field coil, which rotates with the rotor, and the external power supply, which is fixed.

The slip rings are respectively connected to a corresponding end of the field coil through an electrical connector. In this context, the main objective of the present invention is to provide a rotor with the electrical connector between the field coil and the slip rings, that is easier to produce.

### SUMMARY OF THE INVENTION

More precisely, the present invention concerns a rotor for a rotary electric machine, the rotor comprising a rotor shaft configured to rotate around an axis of rotation, a rotor body formed of a stack of laminations and being configured to be mounted coaxially on the rotor shaft, a field coil wound around the rotor body, and at least one slip ring. The at least one slip ring is mounted on the rotor shaft and is configured to exchange electric power with an external power supply, each of the at least one slip ring being configured to be electrically connected to an end of the field coil through an electrical connector. The electrical connector of the rotor has a first terminal portion configured to be electrically connected to the corresponding slip ring, and a second terminal portion configured to be electrically connected to the corresponding end of the field coil.

Then, the rotor comprises at least one guiding element configured to mechanically guide the electrical connector towards the corresponding end of the field coil by deforming the electrical connector from a first state into a second state, in particular by elastically deforming the electrical connector from the first state into the second state. In the second state, the electrical connector comprises an axial portion passing through an axial bore of the rotor shaft and a curved portion. The first terminal portion is connected to an end of the axial portion. The second terminal portion is connected to an end of the curved portion passing through a through bore of the rotor shaft facing the corresponding end of the field coil.

The present invention provides thus the substantial gain of allowing to easily set up the electrical connector within the axial bore of the rotor shaft, the electrical connector electrically connecting the at least one slip ring and the field coil together. In fact, the invention allows to avoid having to shape the electrical connector during its insertion within the rotor shaft, which considerably facilitates the manufacturing of the rotor. Moreover, the use of the guiding element to guide the electrical connector into position is a simple operation that may be automated, which further eases the production of the rotor, and thus reduces the related time and cost of production.

Advantageously, the at least one guiding element has a slide shape such that the electrical connector engages in a slide connection with the at least one guiding element. The slide shape provides a better holding of the electrical connector during its insertion within the rotor shaft.

Advantageously, the at least one guiding element comprises an axial guiding element arranged on a circumference of the axial bore of the rotor shaft, the axial guiding element being configured to mechanically guide in an axial direction the corresponding electrical connector.

Advantageously, the at least one guiding element comprises a curved guiding element configured to mechanically guide the corresponding electrical connector from the first state into the second state.

Advantageously, the curved guiding element has a curved conical shape and is arranged at an axial position of the rotor shaft, the curved portion of the electrical connector being configured to abut against the curved guiding element such that to force the electrical connector to deform into the second state, notably to elastically deform into the second state.

Advantageously, the end of the curved portion is substantially diametrically opposed to the axial portion of the electrical connector in the second state with reference to the axis of rotation. Doing so allows advantageously to increase a curvature radius of the curved portion of the electrical connector, and thus to reduce the mechanical stress distribution within the electrical connector.

Advantageously, the rotor comprises two slip rings, each of the two slip rings having a corresponding electrical connector of two electrical connectors. Then, the two electrical connectors may for instance be accommodated on two diametrically opposed locations of the rotor shaft. In particular, there could be a slight tangential angle between the two electrical connectors such that they do not hinder with each other.

Advantageously, the electrical connector is overmolded with an insulation material. The overmolded electrical connector allows to ensure the insulation between the rotor shaft and the electrical connector.

Advantageously, the electrical connector has a rectangular section.

Advantageously, the field coil and the electrical connector are electrically connected to one another through a hook or a fork, the fork or the hook being either on the second terminal portion of the electrical connector or on the corresponding end of the field coil.

Advantageously, the rotor comprises a holder, the at least one slip ring being mounted on the holder, the holder being mounted on the rotor shaft. The use of the holder allows to have a standardized sub-assembly comprising the holder and the slip rings, which is easier to mount on the rotor shaft, and allows at a same time to ensure the electrical insulation between the slip rings and the rotor shaft.

Advantageously, the rotor comprises a cap configured to close an opening of the axial bore on an axial end of the rotor shaft. The cap may notably be configured to secure the positioning of the electrical connector, axially and/or radially.

Advantageously, the through bore of the rotor shaft is substantially directed in a radial direction or is skewed by an angle with the axis of rotation of the rotor. The shape of the at least one guiding element, and consequently the shape of the electrical connector in the second state, are adapted accordingly.

Advantageously, the axial bore of the rotor shaft is filled with a filling material.

Advantageously, the rotor body has a plurality of teeth projecting radially and slots corresponding to space between adjacent teeth of the plurality of teeth, the field coil being wound around each tooth of the plurality of teeth.

The present invention also concerns a method for producing the rotor as described previously, the method comprising:
- inserting the electrical connector in the axial bore of the rotor shaft through the opening of the axial bore on the axial end of the rotor shaft, the electrical connector being progressively deformed, notably elastically deformed, by the at least one guiding element from the first state into the second state in which the second terminal portion of the electrical connector faces the corresponding end of the field coil.

Advantageously, the at least one guiding element comprising the axial guiding element arranged on a circumference of the axial bore of the rotor shaft and the curved guiding element, inserting the electrical connector comprises axially sliding the electrical connector within the axial guiding element and progressively deforming, in particular elastically deforming, the electrical connector by the curved guiding element until the second terminal portion of the electrical connector faces the corresponding end of the field coil.

Advantageously, the rotor comprising two slip rings, each of the two slip rings having a corresponding electrical connector of two electrical connectors, the method comprises inserting the two electrical connectors at a same time.

Advantageously, inserting the electrical connector is performed in a unidirectional manner along the axis of rotation. Only back and forth movements along the axis of rotation are then needed to put the electrical connector in place. Moreover, this further helps the automation of the process of setting up the electrical connector, and thus to limit manual operations, which are generally more costly and delicate.

According to an aspect of the invention, the invention relates to the rotary electric machine comprising the rotor as described previously and a stator.

Another aspect of the invention is the electric drive, comprising the rotary electric machine and an inverter configured to convert a direct current voltage coming from a high-voltage power supply battery into an alternating current voltage so as to drive the rotary electric machine. The AC voltage may be a multiphase AC voltage, especially a three-phase voltage.

A further aspect of the invention is an electric of a hybrid vehicle, comprising the electric drive for driving the vehicle. The vehicle may comprise the high-voltage power supply battery, preferably a rechargeable battery for providing the DC voltage to the inverter, if applicable.

These and other objects, features, aspects and advantages of the present invention will become apparent to those skilled in the art from the following detailed description, which, taken in conjunction with the annexed drawings, discloses preferred embodiments of the present invention.

### BRIEF DESCRIPTION OF THE DRAWINGS

The invention will be better understood on reading the description that follows, and by referring to the appended drawings given as non-limiting examples, in which identical references are given to similar objects and in which:
Figure 1 is a schematic diagram of a view of an example of a rotor according to an embodiment of the invention;
Figure 2 is a schematic diagram of a partial cut view of the example of the rotor according to an embodiment of the invention;
Figure 3 is a schematic diagram of another partial cut view of the example of the rotor according to an embodiment of the invention;
Figure 4 is a schematic diagram of a partial cut view of another example of the rotor according to an embodiment of the invention;
Figure 5 is a schematic diagram of an automotive electric or hybrid vehicle comprising the rotor of a rotary electric machine according to an embodiment of the invention.

### DETAILED DESCRIPTION

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

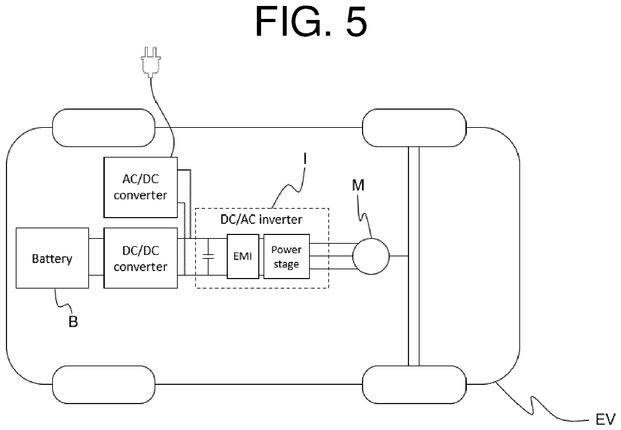

In reference to Figure 5, an aspect of the invention is an electric vehicle or a hybrid electric automotive vehicle EV comprising wheels and an electric drive configured to drive at least indirectly at least one of the wheels of the vehicle. The vehicle may comprise a high-voltage power supply battery B, preferably a rechargeable battery, for providing electric power to the electric drive. Although, the invention is not limited to this domain.

Another aspect of the invention is the electric drive comprising a rotary electric machine M and an inverter I configured to convert a direct current (DC) voltage coming from the high-voltage power supply battery B into an alternating current (AC) voltage in order to drive the rotary electric machine M. The rotary electric machine M may in particular be a three-phase rotary electric machine supplied with a three-phase AC voltage.

The invention also relates to the rotary electric machine comprising a stator, referring to a fixed part of the rotary electric machine, and a rotor, referring to a rotating part of the rotary electric machine. The rotor is, in particular, a separately excited rotor, also commonly referred as a wound rotor or a slip ring rotor. More precisely, the stator presents an annular shape and surrounds coaxially the rotor. Then, the rotary electric machine comprises a casing covering both the stator and the rotor. Ordinarily, the stator comprises a stator body formed of a stack of stator laminations having a plurality of stator teeth projecting radially, and stator windings wound around the stator teeth.

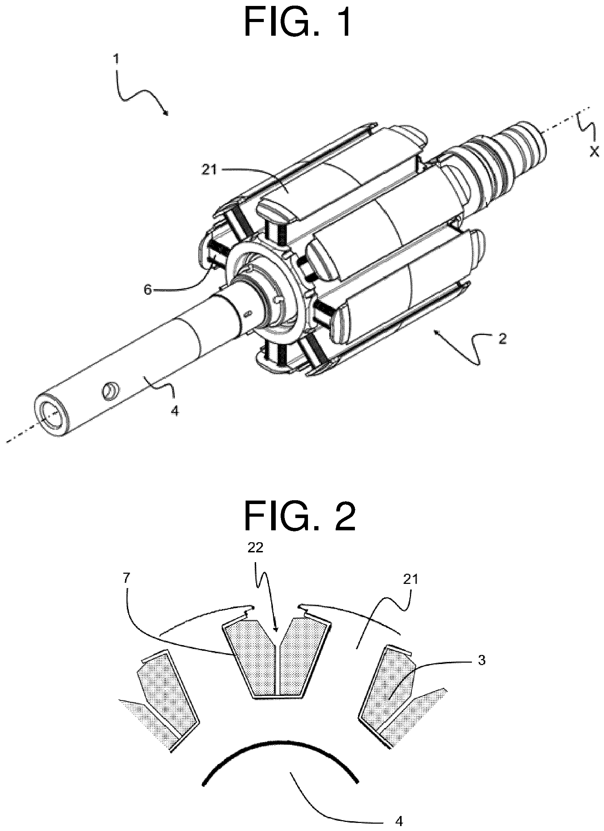

Figure 1 discloses a partial view of an example of the rotor 1 according to a further aspect of the invention. The rotor 1 comprises a rotor shaft 4 configured to rotate around an axis X of rotation, a rotor body 2 formed of a stack of laminations and being configured to be mounted coaxially on the rotor shaft 4, and at least one field coil wound around the rotor body 2. The laminations are especially stacked along the axis X of rotation. The rotor body 2 may be for instance press-fitted on the rotor shaft 4.

Figure 2 illustrates a partial cut view of an example of the rotor. More specifically, the rotor body 2 has a plurality of teeth 21 projecting radially and slots 22 corresponding to spaces between adjacent teeth of the plurality of teeth 21. The plurality of teeth 21 may notably comprise four, six, or eight teeth for example. Then, the field coil 3 is especially wound around each tooth of the plurality of teeth 21, passing through the slots 22, and forming coil ends projecting axially from respectively two axial ends of the rotor body 2.

The rotor may also present an insulation system 7 arranged on walls of the slots 22 between the rotor body 2 and the field coil 3 such that to electrically insulate the rotor body 2 from the field coil 3. More specifically, the walls of the slots 22 correspond to faces of the rotor body 2 directed towards the slots 22. Then, the insulation system 7 may be for example an insulation paper.

The rotor 1 may further comprise two end plates 6, as represented in Figure 1, configured to come respectively against the two axial ends of the rotor body 2. The two end plates 6 notably present an annular shape, substantially similar to the shape of the two axial ends of the rotor body 2, such that to be able to cover the two axial ends. Then, the field coil advantageously passes over the two end plates 6. In other words, the two end plates 6 are located between the rotor body 2 and the coil ends of the field coil 3 such that to provide a mechanical holding of the stack of laminations and to electrically insulate axially the field coil from the rotor body 2.

With reference to Figure 1, the field coil is then connected to an external power supply through at least one slip ring 5 mounted on the rotor shaft 4, namely on an axial end of the rotor shaft 4. The slip rings especially correspond to electro-mechanical devices configured to allow the exchange of electric power between a rotating element and a fixed element, here respectively the field coil and the external power supply. Then, each of the at least one slip ring is configured to be electrically connected to an end of the field coil through an electrical connector.

In particular, the rotor may have two different types of poles, respectively positive poles and negative poles, the plurality of teeth presenting an alternance of a tooth corresponding to a positive pole, and of a tooth corresponding to a negative pole. Then, the rotor has advantageously two slip rings having each a corresponding electrical connector of two electrical connectors. Each one of the two electrical connectors connect respectively the corresponding slip ring to a corresponding end of the field coil. Although, the rotor may comprise another number of slip rings, given that each one of the slip rings has a corresponding electrical connector.

In the following description, only one electrical connector will be detailed for the sake of clarity. Although, as described in a previous example, the rotor may comprise two slip rings, and thus two corresponding electrical connectors are arranged.

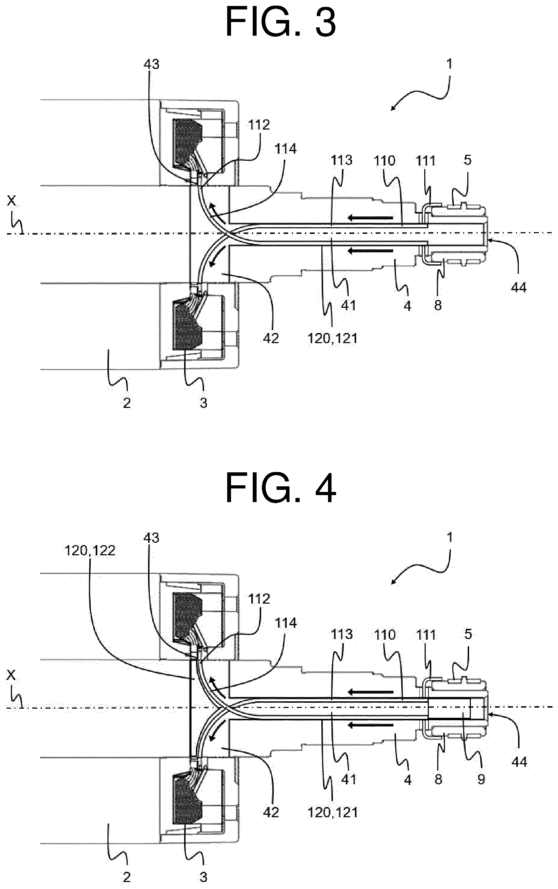

Figure 3 and 4 illustrate partial cut views of respectively two examples of the rotor 1 according to the invention. It is important to note that the representation of the electrical connector 110 is purely schematic in Figures 3 and 4.

The electrical connector 110 has a first terminal portion 111 configured to be electrically connected to the corresponding slip ring 5, and a second terminal portion 112 configured to be electrically connected to the corresponding end of the field coil 3. The rotor shaft 4 further has an axial bore 41 configured to be traversed by the electrical connector 110. Hence, the electrical connector is advantageously arranged within the rotor shaft, which allows to reduce the cumbersomeness of the rotor. Moreover, doing so makes it easier to manage the positioning of the electrical connector through the service life of the rotor.

The rotor 1 comprises also at least one guiding element 120 configured to mechanically guide the electrical connector 110 towards the corresponding end of the field coil 3 by deforming the electrical connector 110 from a first state into a second state, notably by elastically deforming the electrical connector 110 from the first state into the second state. In the second state, the second terminal portion 112 of the electrical connector 110 especially faces the corresponding end of the field coil 3. The electrical connector 110 presents advantageously an internal stiffness such that to allow the electrical connector 110 to move between the first state and the second state through an elastic deformation.

The electrical connector 110 may be for instance substantially longitudinal in the first state. In the second state, the electrical connector 110 comprises an axial portion 113 passing through the axial bore 41 of the rotor shaft 4 and a curved portion 114. The curved portion 114 may have a curvature radius so that to have an acceptable deformation of the electrical connector 110. The first terminal portion 111 is connected to an end of the axial portion 113. The second terminal portion 112 is connected to an end of the curved portion 114 passing through a through bore 42 of the rotor shaft 4 facing the corresponding end of the field coil 3. More specifically, the through bore 42 has an opening 43 facing the field coil 3, such that the second terminal portion 112 of the corresponding electrical connector 110 may be electrically connected to the corresponding end of the field coil 3.

The invention also concerns a method for producing the rotor as described previously, the method comprising:
- inserting the electrical connector 110 in the axial bore 41 of the rotor shaft 4 through an opening of the axial bore 41 on the axial end 44 of the rotor shaft 4, the electrical connector 110 being progressively deformed, in particular elastically deformed, by the at least one guiding element 120 from the first state into the second state in which the second terminal portion 112 of the electrical connector 110 faces the corresponding end of the field coil 3. The directions of insertion of each electrical connector 110 are represented by thick black arrows in Figures 3 and 4.

Prior to inserting the electrical connector 110 in the axial bore 41 of the rotor shaft 4, the electrical connector 110 may be assembled with the at least one slip ring 5, and the at least one guiding element 120 may be arranged inside the rotor shaft 4.

Then, after inserting the electrical connector 110 in the axial bore 41 of the rotor shaft 4, the method may further comprise electrically connecting the second terminal portion 112 with the corresponding end of the field coil 3.

In the exemplary embodiment in which the rotor 1 has two slip rings, each of the two slip rings having a corresponding electrical connector 110 of two electrical connectors, the method may preferably comprise inserting the two electrical connectors at a same time.

The present invention provides thus the substantial gain of allowing to easily set up the electrical connector within the axial bore of the rotor shaft, the electrical connector electrically connecting the at least one slip ring and the field coil together. It can be noted that, in the state-of-the-art technology, a conventional electrical connector configured to pass through an inner channel of the rotor shaft, would have to be shaped inside the rotor shaft during the insertion of the electrical connector. And this shaping operation involves complex manual steps. Hence, the invention allows to avoid having to shape the electrical connector during its insertion within the rotor shaft, which considerably facilitates the manufacturing of the rotor. Moreover, the use of the guiding element to guide the electrical connector into position is a simple operation that may be automated, which further eases the production of the rotor, and thus reduces the related time and cost of production.

In addition, inserting the electrical connector 110 may be performed in a unidirectional manner along the axis X of rotation. Only back and forth movements along the axis of rotation are then needed to put the electrical connector in place. This further helps the automation of the process of setting up the electrical connector, and thus to limit manual operations, which are generally more costly and delicate to conduct.

Besides, it can be noted that the through bore 42 may be directed substantially in a radial direction, but not necessarily. In fact, the through bore 42 may also be skewed and thus may present an angle with the axis of rotation of the rotor, if appropriate. The shape of the at least one guiding element, and consequently the shape of the electrical connector in the second state, are adapted accordingly.

Preferably, the at least one guiding element 120 has a slide shape such that the electrical connector 110 engages in a slide connection with the at least one guiding element 120. The slide shape provides a better holding of the electrical connector 110 during its insertion within the rotor shaft 4. Alternatively, the at least one guiding element 120 may have a groove shape, for instance machined on an internal circumference of the rotor shaft 4. The at least one guiding element 120 may also present a combination of both shapes, that is, the at least one guiding element 120 may have parts having the slide shape and parts having the groove shape. Although, the slide shape provides an improved control of the guiding of the electrical connector 110, while the electrical connector 110 is subjected to deformation, compared to the groove shape.

The at least one guiding element 120 may comprise an axial guiding element 121 arranged on a circumference of the axial bore 41 of the rotor shaft 4. Then, the axial guiding element 121 is configured to mechanically guide in an axial direction the corresponding electrical connector 110. The axial guiding element 121 may for instance have a slide shape, or a groove shape. Then, in the configuration of the groove shape, the axial guiding element 121 may consist of a groove machined on the circumference of the axial bore 41 of the rotor shaft 4.

Furthermore, the at least one guiding element 120 may comprise a curved guiding element 122 configured to mechanically guide the corresponding electrical connector 110 from the first state into the second state. The curved guiding element 122 allows thus to curve the electrical connector 110 by deforming, in particular by elastically deforming, the electrical connector 110 such that to guide the second terminal portion 112 towards the corresponding end of the field coil 3.

Then, regarding the method for producing the rotor as previously described, inserting the electrical connector 110 especially comprises axially sliding the electrical connector 110 within the axial guiding element 121 and progressively deforming, notably elastically deforming, the electrical connector 110 by the curved guiding element 122 until the second terminal portion 112 of the electrical connector 110 faces the corresponding end of the field coil 3.

Besides, as illustrated in Figure 4, the curved guiding element 122 may have a curved conical shape and may be arranged at an axial position of the rotor shaft 4, the axial position substantially corresponding to an axial position of the coil ends of the field coil 3. It can be noted that the curved guiding element 122 is represented schematically in Figure 4. Then, the curved portion 114 of the electrical connector 110 is configured to abut against the curved guiding element 122 such that to force the electrical connector 110 to deform, in particular to elastically deform, into the second state.

Moreover, the end of the curved portion 114 is preferably substantially diametrically opposed to the axial portion 113 of the electrical connector 110 in the second state with reference to the axis X of rotation. Doing so allows advantageously to increase the curvature radius of the curved portion 114 of the electrical connector 110, and thus to reduce the mechanical stress distribution within the electrical connector 110. Although, it is possible to have the end of the curved portion 114 at a substantially same tangential position as the axial portion 113.

The axial bore 41 of the rotor shaft 4 may be further filled with a filling material, for instance a resin. This allows to fix the electrical connector 110 inside the axial bore 41.

The electrical connector 110 may advantageously be overmolded with an insulation material. The overmolded electrical connector allows to ensure the electrical insulation between the rotor shaft and the electrical connector. Alternatively, other insulation means may be arranged either surrounding the electrical connector or within the axial bore and the through bore of the rotor shaft for the electrical insulation between the electrical connector and the rotor shaft.

The electrical connector may have a rectangular section, namely the electrical connector is a flat conductor.

Besides, the electrical connector is advantageously made out of a material comprising copper.

In addition, the field coil 3 and the electrical connector 110 may advantageously be electrically connected to one another using a connection system that does not necessarily require welding, for instance through a hook or a fork. The fork or the hook may either be on the second terminal portion 112 of the electrical connector 110 or on the corresponding end of the field coil 3. Then, the other one of the second terminal portion 112 of the electrical connector 110 or of the field coil 3 is capable of being electrically connected to the fork or the hook without having to be weld together. Doing so eases the connection of the electrical connector to the corresponding end of the field coil. Although, the connection between the field coil and the electrical connector may be further secured with a weld.

In a previously described example with two slip rings and two corresponding electrical connectors, the two electrical connectors may for instance be accommodated on two diametrically opposed locations of the rotor shaft. In particular, there could be a slight tangential angle between the two electrical connectors such that they do not hinder with each other.

Besides, as illustrated in Figures 1, 3, and 4 the rotor 1 may comprise a holder 8, the at least one slip ring 5 being mounted on the holder 8, the holder 8 being mounted on the rotor shaft 4. In other words, the at least one slip ring 5 is mounted on the rotor shaft 4 through the holder 8. The use of the holder allows to have a standardized sub-assembly comprising the holder and the slip rings, which is easier to mount on the rotor shaft, and allows at a same time to ensure the electrical insulation between the slip rings and the rotor shaft. The at least one slip ring 5, the holder 8, and the electrical connector 110 may notably be mounted together into a sub-assembly before mounting the sub-assembly by inserting the electrical connector 110 within the axial bore 41 of the rotor shaft 4, and mounting the holder 8 on the rotor shaft 4.

With reference to Figure 4, the rotor 1 may comprise a cap 9 configured to close the opening of the axial bore 41 on the axial end 44 of the rotor shaft 4. The cap 9 may further be configured to secure the positioning of the electrical connector, axially and/or radially. Moreover, the cap 9 may advantageously provide a sealed barrier within the axial bore of the rotor shaft such that to ease the filling of the axial bore with the filling material.

Although embodiments have been described with reference to a number of illustrative embodiments thereof, it should be understood that numerous other modifications and embodiments can be devised by those skilled in the art that will fall within the spirit and scope of the principles of this disclosure.

## Claims

1. A rotor (1) for a rotary electric machine (M), the rotor (1) comprising:
- a rotor shaft (4) configured to rotate around an axis (X) of rotation;
- a rotor body (2) formed of a stack of laminations and being configured to be mounted coaxially on the rotor shaft (4);
- a field coil (3) wound around the rotor body (2);
- at least one slip ring (5) mounted on the rotor shaft (4) and configured to exchange electric power with an external power supply, each of the at least one slip ring (5) being configured to be electrically connected to an end of the field coil (3) through an electrical connector (110), the electrical connector (110) having a first terminal portion (111) configured to be electrically connected to the corresponding slip ring (5) and a second terminal portion (112) configured to be electrically connected to the corresponding end of the field coil (3);
**characterized in that** the rotor (1) comprises at least one guiding element (120) configured to mechanically guide the electrical connector (110) towards the corresponding end of the field coil (3) by deforming the electrical connector (110) from a first state into a second state in which the electrical connector (110) comprises an axial portion (113) passing through an axial bore (41) of the rotor shaft (4) and a curved portion (114), the first terminal portion (111) being connected to an end of the axial portion (113), the second terminal portion (112) being connected to an end of the curved portion (114) passing through a through bore (42) of the rotor shaft (4) facing the corresponding end of the field coil (3).

2. The rotor (1) as claimed in the previous claim, wherein the at least one guiding element (120) has a slide shape such that the electrical connector (110) engages in a slide connection with the at least one guiding element (120).

3. The rotor (1) as claimed in any of the preceding claims, wherein the at least one guiding element (120) comprises an axial guiding element (121) arranged on a circumference of the axial bore (41) of the rotor shaft (4), the axial guiding element (121) being configured to mechanically guide in an axial direction the corresponding electrical connector (110).

4. The rotor (1) as claimed in any of the preceding claims, wherein the at least one guiding element (120) comprises a curved guiding element (122) configured to mechanically guide the corresponding electrical connector (110) from the first state into the second state.

5. The rotor (1) as claimed in the previous claim, wherein the curved guiding element (122) has a curved conical shape and is arranged at an axial position of the rotor shaft (4), the curved portion (114) of the electrical connector (110) being configured to abut against the curved guiding element (122) such that to force the electrical connector (110) to deform into the second state.

6. The rotor (1) as claimed in any of the preceding claims, wherein the end of the curved portion (114) is substantially diametrically opposed to the axial portion (113) of the electrical connector (110) in the second state with reference to the axis (X) of rotation.

7. The rotor (1) as claimed in any of the preceding claims, wherein the rotor (1) comprises two slip rings, each of the two slip rings having a corresponding electrical connector (110) of two electrical connectors.

8. The rotor (1) as claimed in any of the preceding claims, wherein the electrical connector (110) is overmolded with an insulation material.

9. The rotor (1) as claimed in any of the preceding claims, wherein the field coil (3) and the electrical connector (110) are electrically connected to one another through a hook or a fork, the fork or the hook being either on the second terminal portion (112) of the electrical connector (110) or on the corresponding end of the field coil (3).

10. The rotor (1) as claimed in any of the preceding claims, wherein the rotor (1) comprises a holder (8), the at least one slip ring (5) being mounted on the holder (8), the holder (8) being mounted on the rotor shaft (4).

11. The rotor (1) as claimed in any of the preceding claims, wherein the rotor (1) comprises a cap (9) configured to close an opening of the axial bore (41) on an axial end (44) of the rotor shaft (4).

12. A method for producing the rotor (1) as claimed in any of the preceding claims, the method comprising:
- inserting the electrical connector (110) in the axial bore (41) of the rotor shaft (4) through the opening of the axial bore (41) on the axial end (44) of the rotor shaft (4), the electrical connector (110) being progressively deformed by the at least one guiding element (120) from the first state into the second state in which the second terminal portion (112) of the electrical connector (110) faces the corresponding end of the field coil (3).

13. The method as claimed in the previous claim, the at least one guiding element (120) comprising the axial guiding element (121) arranged on a circumference of the axial bore (41) of the rotor shaft (4) and the curved guiding element (122), wherein inserting the electrical connector (110) comprises axially sliding the electrical connector (110) within the axial guiding element (121) and progressively deforming the electrical connector (110) by the curved guiding element (122) until the second terminal portion (112) of the electrical connector (110) faces the corresponding end of the field coil (3).

14. The method as claimed in any of the claims 12 or 13, the rotor (1) comprising two slip rings, each of the two slip rings having a corresponding electrical connector (110) of two electrical connectors, wherein the method comprises inserting the two electrical connectors at a same time.

15. A rotary electric machine (M) for an electric or a hybrid vehicle (EV), the rotary electric machine (M) comprising the rotor (1) according to any of the claims 1 to 11.
